# EUROPEAN PATENT APPLICATION

(11) **EP 4 819 330 A1**
(43) Date of publication of application: **07.10.2026**
(21) Application number: 24933680.1
(22) Date of filing: 02.08.2024
(51) Int. Cl.: H01M 50/244

(54) **BATTERY AND ELECTRIC APPARATUS**

(30) Priority: 02.04.2024 CN 202420670107 U
(71) Applicant: Contemporary Amperex Technology Co., Limited, Ningde, Fujian 352100 (CN)
(72) Inventor: ZHANG, Wenhui, Ningde, Fujian 352100 (CN); LONG, Chao, Ningde, Fujian 352100 (CN); YAO, Pengcheng, Ningde, Fujian 352100 (CN); CHEN, Xingdi, Ningde, Fujian 352100 (CN); WANG, Peng, Ningde, Fujian 352100 (CN)
(74) Representative: Ran, Handong
(86) International application number: PCT/CN2024/109531
(87) International publication number: WO 2025/208751

(57) **Abstract**

A battery (100) and an electric apparatus. The battery (100) comprises a case (20), battery cells (10), a power distribution box (30), and sealing members (40). The case (20) comprises a case wall (21), and through holes (22) are formed in the case wall (21). The battery cells (10) are accommodated in the case (20). The power distribution box (30) comprises a housing (31) and adapter bases (32), the housing (31) is arranged on the outer side of the case wall (21) and is connected to the case wall (21), the adapter bases (32) are connected to the housing (31), and at least part of each of the adapter bases (32) is accommodated in the corresponding through hole (22). The sealing members (40) are arranged between the case wall (21) and the housing (31) and surround the through holes (22). According to the provided battery (100), the adapter bases (32) are directly connected to the housing (31), and the power distribution box (30) provided with the adapter bases (32) is connected to the case (20), such that the connection strength between the adapter bases (32) and the power distribution box (30) is satisfied, the probability of contaminants and the like entering the power distribution box (30) via the adapter bases (32) is reduced, the sealing performance of the power distribution box (30) and the adapter bases (32) is improved, and the assembly degree of the power distribution box (30) and the case (20) is also simplified, thereby improving the assembly efficiency of the battery (100).

## Description

### CROSS-REFERENCE TO RELATED APPLICATIONS

The present application claims priority to Chinese Patent Application No. 202420670107.6.X, filed on April 02, 2024 and entitled "Battery Management System and Electric apparatus", which is incorporated herein by reference in its entirety.

### TECHNICAL FIELD

The present application relates to the field of battery manufacturing technologies, and in particular, to a battery, and an electric apparatus.

### BACKGROUND

Batteries are widely used in electronic devices, such as mobile phones, notebook computers, electric bicycles, electric vehicles, electric airplanes, electric ships, electric toy cars, electric toy ships, electric toy airplanes, electric tools, etc.

In the development of battery technologies, how to improve the reliability of a battery is a technical problem to be solved in the battery technologies.

### SUMMARY

The present application provides a battery and an electric device, aiming to improve the reliability of the battery to some extent.

In a first aspect, the present application provides a battery, which includes a case, a battery cell, a power distribution box, and a sealing member; The case includes a case wall, and the case wall is provided with a through hole; The battery cell is accommodated in the case. The power distribution box includes a housing and an adapter base, the housing is disposed on an outer side of the case wall and connected to the case wall, the adapter base is connected to the housing, and at least a part of the adapter base is accommodated in the through hole; The sealing member is disposed between the case wall and the housing and surrounds the through hole.

The battery provided in this application includes a case, a battery cell, a power distribution box, and a sealing member. The housing is disposed on the outer side of the case wall and connected to the case wall, that is, the power distribution box is disposed on the outer side of the case, the power distribution box and the case are disposed independently, and the high-temperature gas leaked from the battery cell due to the thermal failure does not directly enter the power distribution box, thereby reducing the thermal damage to the power distribution box. The adapter base is directly connected to the housing, and the power distribution box with the adapter base is connected to the case, which not only satisfies the connection strength between the adapter base and the power distribution box, reduces the probability of pollutants and the like entering the power distribution box via the adapter base, and improves the sealing performance of the adapter base and the power distribution box, but also simplifies the assembly degree of the power distribution box and the case, thereby improving the assembly efficiency of the battery. The sealing member is disposed between the case wall and the housing and surrounds the through hole to realize the sealing of the adapter base and the case, thereby reducing the risk of external pollutants entering the case through the through hole, and improving the reliability of the battery.

According to an embodiment of the present application, the housing and the adapter base are integrally connected.

In these optional embodiments, the housing and the adapter base are integrally disposed, so that the housing and the adapter base have high connection strength, and the housing and the adapter base have high sealing performance, and the two are not easy to fall off when subjected to an external force, and the reliability of the battery is improved.

According to an embodiment of the present application, the adapter base includes a first adaptation portion and a second adaptation portion, the first adaptation portion is connected to the housing and extends into the housing, and the second adaptation portion is connected to the first adaptation portion and extends into the through hole.

In these optional embodiments, the adapter base includes a first adaptation portion and a second adaptation portion, the first adaptation portion extends into the housing to be connected to the electrical device in the housing, and the second adaptation portion extends into the through hole to be connected to the component in the case, so as to realize the adaptation of the power distribution box and the case.

According to an embodiment of the present application, an orthographic projection of the housing on the case wall covers an orthographic projection of the sealing member on the case wall.

In these optional embodiments, such an arrangement enables the sealing member to have an appropriate size, which not only achieves the sealing of the adapter base and the case, but also reduces the manufacturing cost of the sealing member.

According to an embodiment of the present application, a protrusion is provided on a surface of the housing facing the case wall, and the protrusion is configured to limit the sealing member.

In these optional embodiments, the protrusion is used to define a sealing member to improve the sealing between the adapter base and the case.

According to an embodiment of the present application, the protrusion is disposed around the sealing member.

According to an embodiment of the present application, the case wall includes a heat exchange plate and a protection plate, the heat exchange plate is disposed on a side of the protection plate facing away from the power distribution box and is connected to the protection plate, the heat exchange plate is thermally connected to the battery cell to adjust the temperature of the battery cell, the through hole includes a first through hole and a second through hole, the protection plate is provided with the first through hole, the heat exchange plate is provided with the second through hole, and the first through hole is communicated with the second through hole.

In these optional embodiments, the heat exchange plate and the protection plate are integrated on the case, which not only facilitates the installation of the power distribution box, but also can perform heat exchange with the battery cells, and reduce the number of parts of the battery and improve the integration level of the battery.

According to an embodiment of the present application, the sealing member is an elastic member.

In these optional embodiments, the sealing member is an elastic member, so that when the high-pressure box is assembled with the case wall, the sealing area between the sealing member and the case wall is increased through the elastic deformation of the sealing member, thereby improving the sealing effect between the sealing member and the case wall.

According to an embodiment of the present application, the power distribution box is protruded from the top of the case.

In these optional embodiments, such an arrangement can increase the reliability of the power distribution box.

According to an embodiment of this application, the battery further includes a connecting member, and the connecting member is configured to connect the housing and the case wall.

In these optional embodiments, the case and the power distribution box are connected by a connecting member to improve the stability of the assembly of the case and the power distribution box.

According to an embodiment of the present application, the plurality of battery cells are electrically connected to form a total positive output electrode and a total negative output electrode, and the total positive output electrode and the total negative output electrode are connected to the adapter base.

In a second aspect, the present application provides an electric apparatus, including the forgoing battery, and the battery is used to provide electric energy.

The above description is merely an overview of the technical solutions of the present application. For a clearer understanding of the technical means of the present application, the present application can be carried out in accordance with the content of the description, and in order to make the above and other objectives, characteristics, and advantages of the present application apparent and comprehensible, specific embodiments of the present application are described below.

### BRIEF DESCRIPTION OF THE DRAWINGS

The feature, advantage, and technical effect of the exemplary embodiment of the present application is described below with reference to the figures.
FIG. 1 is a schematic structural diagram of a vehicle according to an embodiment of the present application.
FIG. 2 is a schematic structural diagram of a battery according to an embodiment of the present application.
FIG. 3 is a schematic structural diagram of a cross section of a battery according to an embodiment of the present application.
FIG. 4 is a schematic cross-sectional structural diagram of the battery provided by some embodiments shown in FIG. 3 along line a-a;
FIG. 5 is a partial enlarged schematic structural diagram of the battery of some embodiments shown in FIG. 4.

The accompanying drawings are not necessarily drawn to scale.

Description of reference signs:
1000: vehicle; 100: battery; 200: controller; 300: motor; 10: battery cell; 20: case; 21: case wall; 211: heat exchange plate; 212: protection plate; 22: through hole; 221: first through hole; 222: second through hole; 30: power distribution box; 31: housing; 311: protrusion; 32: adapter base; 321: first adaptation portion; 322: second adaptation portion; 40: sealing member; 50: connecting member.

### DETAILED DESCRIPTION OF PREFERRED EMBODIMENTS

To make the objectives, technical solutions, and advantages of embodiments of the present application clearer, the following clearly describes the technical solutions in the embodiments of the present application with reference to the drawings in the embodiments of the present application. Clearly, the described embodiments are some but not all of the embodiments of the present application. All other embodiments obtained by those skilled in the art based on the embodiments of the present application without making creative efforts shall fall within the protection scope of the present application.

Unless otherwise defined, all technical and scientific terms used in the present application have the same meaning as commonly understood by those skilled in the art to which the present application belongs. The terms used in the description of the present application herein are merely for the purpose of describing specific embodiments and are not intended to limit the present application. The terms "include", "be provided with", and any other variants thereof in the specification, claims, and accompanying drawings of the present application are intended to cover a non-exclusive inclusion. The terms "first", "second", and the like in the description and claims of the present application or in the drawings are used to distinguish between different objects, and are not used to describe a specific sequence or a primary-secondary relationship.

An "embodiment" in the present application means that a specific feature, structure, or characteristic described with reference to the embodiment may be included in at least one embodiment of the present application. The phrase in various places in the description does not necessarily all refer to the same embodiment, or a separate or alternative embodiment mutually exclusive of other embodiments.

In the description of the present application, it should be further noted that, unless explicitly specified and defined otherwise, the terms "mounted", "connected", "connect", and "attached" are to be understood in a broad sense. For example, it may be fixed connection, detachable connection, or integral connection; it may be direct connection, may be indirect connection through an intermediate medium, or may be internal communication between two elements. Those skilled in the art can understand specific meanings of these terms in the present application according to specific situations.

In the present application, the term "and/or" is only an associative relationship for describing associated objects, indicating that three relationships may be present. For example, A and/or B may indicate the following three cases: presence of only A, presence of both A and B, and presence of only B. In addition, the symbol "/" in the present application generally represents an "or" relationship between associated objects.

In the embodiments of the present application, the same reference numerals denote the same component, and a detailed description of the same component is omitted in different embodiments for the sake of brevity. It should be understood that the dimensions of various components, such as the thickness, length, and width, and the dimensions of an integrated device, such as the overall thickness, length, and width, in the embodiments of the present application shown in the figures are merely illustrative and should not be construed as limiting the present application.

The term "a plurality of" in the present application refers to more than two (including two).

In the present application, a battery cell may include a lithium-ion secondary battery cell, a lithium-ion primary battery cell, a lithium-sulfur battery cell, a sodium-lithium ion battery cell, a sodium-ion battery cell, a magnesium-ion battery cell, or the like, which is not limited in the embodiments of the present application. The battery cell may be in a shape of a cylinder, a flat body, a cuboid, or the like, which is not limited in the embodiments of the present application. The battery cells are generally classified into three types in terms of packaging manner: cylindrical battery cells, prismatic battery cells, and pouch battery cells, which are not limited in the embodiments of the present application.

A battery mentioned in the embodiments of the present application refers to a single physical module including one or a plurality of battery cells to provide a higher voltage and capacity. For example, the battery mentioned in the present application may include a battery module, a battery pack, or the like. The battery generally includes a case for encapsulating one or more battery cells. The case can prevent liquids or other foreign objects from affecting the charging or discharging of the battery cells to a certain extent.

The battery cell includes an electrode assembly and an electrolyte. The electrode assembly is composed of a positive electrode sheet, a negative electrode sheet and a separator. Working of the battery cell mainly relies on migration of metal ions between the positive electrode sheet and the negative electrode sheet. The positive electrode sheet includes a positive electrode current collector and a positive electrode active material layer. The positive electrode active material layer is coated on the surface of the positive electrode current collector. The portion of the current collector not coated with the positive electrode active material layer protrudes beyond the portion coated with the positive electrode active material layer, and the uncoated portions of the current collector are stacked together to form a positive electrode tab. A lithium-ion battery is used as an example, for which, the positive electrode current collector may be made of aluminum, and the positive electrode active material may be lithium cobalt oxide, lithium iron phosphate, ternary lithium, lithium manganate oxide, or the like. The negative electrode sheet includes a negative electrode current collector and a negative electrode active material layer. The negative electrode active material layer is coated on the surface of the negative electrode current collector. The portion of the current collector not coated with the negative electrode active material layer protrudes beyond the portion coated with the negative electrode active material layer, and the uncoated portions of the current collector are stacked together to form a negative electrode tab. The negative electrode current collector may be made of copper, and the negative electrode active material may be carbon, silicon, or the like. The separator may be made of PP (polypropylene, polypropylene), PE (polyethylene, polyethylene), or the like. In addition, the electrode assembly may be a wound structure or a stacked structure, and the embodiments of the present application are not limited thereto.

Therefore, the power distribution box needs to be independent of the case to reduce damage to the power distribution box, and the power distribution box independent of the case needs to use a conversion base to realize the connection between the power distribution box and the case, but external pollutants will enter the power distribution box and the case through the conversion base, such as liquid, which causes a short circuit, thereby reducing the reliability of the battery. The above statement merely provides the background information related to the present application and do not necessarily constitute the prior art.

In view of the above problems, the inventors have conducted intensive research and proposed a battery, which includes a case, a battery cell, a power distribution box and a sealing member. The adapter base is directly connected to the housing, and the power distribution box with the adapter base is connected to the case, which not only satisfies the connection strength between the adapter base and the power distribution box, reduces the probability of pollutants and the like entering the power distribution box via the adapter base, and improves the sealing performance of the adapter base and the power distribution box, but also simplifies the assembly degree of the power distribution box and the case, thereby improving the assembly efficiency of the battery. The sealing member is disposed between the case wall and the housing and surrounds the through hole to realize the sealing of the adapter base and the case, thereby reducing the risk of external pollutants entering the case through the through hole, and improving the reliability of the battery.

The battery may be used in a vehicle, a cell phone, a portable device, a notebook computer, a ship, a spacecraft, an electric toy, an electric tool, etc. The vehicle may be a fuel vehicle, a gas vehicle, or a new energy vehicle, and the new energy vehicle may be a battery electric vehicle, a hybrid vehicle, or a range-extended electric vehicle. The spacecraft may include aircrafts, rockets, space shuttles, spaceships, and the like. The electric toy may include stationary or mobile electric toys, such as game machines, electric car toys, electric ship toys, electric airplane toys, and the like. The electric tool may include metal cutting electric tools, grinding electric tools, assembly electric tools, and electric tools for railways, such as electric drills, electric sanders, electric wrenches, electric screwdrivers, electric hammers, impact drills, concrete vibrators, electric planers, and the like. The embodiments of the present application impose no limitation on the production apparatus of the above electrode tab.

In some embodiments, the battery may be an energy storage device. The energy storage device includes an energy storage container, an energy storage cabinet, and the like.

To facilitate the description, in the following embodiments, as an example for description, an electric device in an embodiment of the present application is a vehicle.

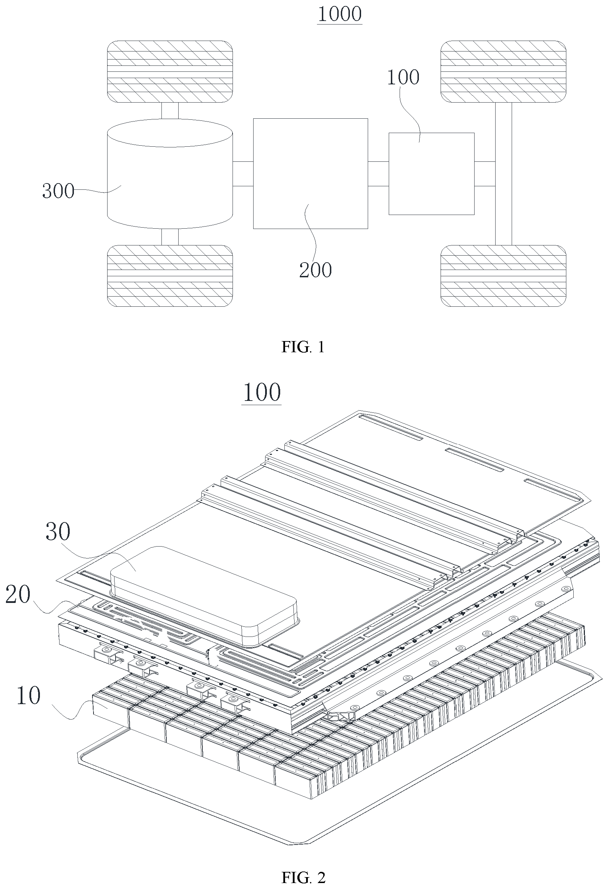

As shown in FIG. 1, one embodiment of the present application provides a vehicle 1000. The vehicle 1000 may be a fuel vehicle, a gas vehicle, or a new energy vehicle. The New energy vehicle may refer to a battery electric vehicle, a hybrid electric vehicle, or an extended-range electric vehicle, among others. In an embodiment of this application, the vehicle 1000 may include a motor 300, a controller 200, and a battery 100. The controller 200 is configured to control the battery 100 to supply power to the motor 300. The motor 300 is connected to wheels through a transmission mechanism, thereby driving the vehicle 1000 to travel. The battery 100 may be used as the driving power source of the vehicle 1000, instead of or partially instead of fuel or natural gas to provide driving power to the vehicle 1000. In one example, the battery 100 may be disposed at the bottom or at the head or at the tail of the vehicle 1000. The battery 100 may be used to power the vehicle 1000. In one example, the battery 100 may be used as an operating power supply of the vehicle 1000 for the circuitry of the vehicle 1000. For example, the battery 100 may be used to meet the working power demands of the vehicle 1000 during starting, navigation, and operation.

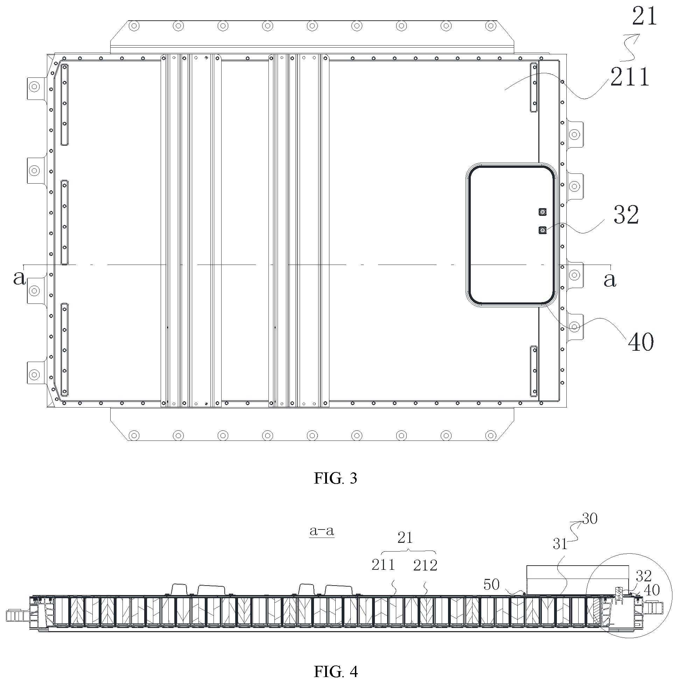

Refer to FIG. 2 and FIG. 3, FIG. 2 is a schematic structural diagram of a battery according to one embodiment of the present application. FIG. 3 is a schematic structural diagram of the cross section of the battery according to one embodiment of the present application.

As shown in FIG. 2 and FIG. 3, the present application provides a battery 100, and the battery 100 includes a case 20, a battery cell 10, a power distribution box 30, and a sealing member 40. The case 20 includes a case wall 21, and the case wall 21 is provided with a through hole 22. The battery cell 10 is accommodated in the case 20. The power distribution box 30 includes a housing 31 and an adapter base 32, the housing 31 is disposed on an outer side of the case wall 21 and connected to the case wall 21, the adapter base 32 is connected to the housing 31, and at least a part of the adapter base 32 is accommodated in the through hole 22. The sealing member 40 is disposed between the case wall 21 and the housing 31 and surrounds the through hole 22.

The case 20 is used to accommodate the battery cell 10, and can to some extent prevent a liquid or other foreign matter from affecting the charging or discharging of the battery cell 10.

For example, the case 20 may include a first case and a second case, the first case and the second case cover each other, and the first case and the second case jointly define the accommodating space for accommodating the battery cell 10. The first case may be a hollow structure with an opening at one end, the second case may be a plate-shaped structure, and the second case covers an opening side of the first case, so that the first case and the second case jointly define the accommodating space. The first case and the second case may each be a hollow structure with an opening on one side, with the opening side of the first case capping the opening side of the second case. Certainly, the case 20 formed by the first case and the second case may be in various shapes such as cylinder, cuboid, etc. The first case and second case may be in various shapes such as cylinder, cuboid, or the like. To increase sealing performance after the first case and second case are connected, a sealing member, for example, a sealant or a sealing ring or the like may be provided between the first case and second case. Assuming that the first case covers the top of the second case, the first case may also be referred to as an upper box cover, and the second case may also be referred to as a lower box.

In the embodiment of the present application, the case 20 includes a case wall 21, and the case wall 21 may be one of a top wall, a side wall, or a bottom wall of the case 20. The case wall 21 is provided with a through hole 22, so that an external component of the case 20 can extend into the through hole 22, or an external component of the case 20 can extend into the case 20 through the through hole 22.

The power distribution box 30 includes a housing 31 and an adapter base 32, the housing 31 can accommodate an electrical device, and the electrical device is electrically connected to the battery cell 10. The distribution box 30 controls the battery 100. As an example, the power distribution box 30 plays a role of protecting the battery 100 and distributing power transmission during charging and discharging of the battery 100. The housing 31 is disposed on an outer side of the case wall 21 and connected to the case wall 21, and when the battery cell 10 experiences thermal runaway, the case wall 21 can protect the power distribution box 30, thereby reducing the risk of damaging the electrical device by the high-temperature substance released by the battery cell 10. The power distribution box 30 is disposed outside the case 20, which can also improve the utilization of the internal space of the battery.

Generally, the voltage of the battery 100 is relatively high, and if the electrical devices (such as the motor controller, the air conditioning system, and the charging system) of the electrical apparatus are directly connected to the battery 100, the battery harness may be disordered, so the battery 100 needs to be distributed to the power distribution box 30 for high-voltage distribution. The power distribution box 30 adopts a centralized power distribution solution, which has a compact structure design, convenient wiring layout, and convenient and quick maintenance.

In some embodiments, the electrical device includes one or more of a fuse, a relay, a resistor, a current sensor, and a battery management assembly, to facilitate the control of the battery 100.

In some embodiments, the housing 31 is connected to the case wall 21 by welding, bolting, hinging, clamping, gluing, or the like.

In the embodiment of the present application, the power distribution box 30 includes a housing 31 and an adapter base 32, the adapter base 32 is connected to the housing 31, and at least a part of the adapter base 32 is accommodated in the through hole 22. Since the power distribution box 30 is disposed outside the case 20, the power distribution box 30 and the case 20 need to be connected through the adapter base 32. At least a part of the adapter base 32 protrudes from the case 20 and is accommodated in the through hole 22, so as to realize the adaptation of the power distribution box 30 and the case 20.

For example, the adapter base 32 and the housing 31 are an integrally formed structure.

For example, the adapter base 32 and the housing 31 are separate structures.

The sealing member 40 is configured to seal the case wall 21 and the housing 31, and the sealing member 40 is disposed between the case wall 21 and the housing 31 and surrounds the through hole 22, so that when the high-voltage box is assembled with the case wall 21, the sealing member 40 is in contact with and abuts against the case wall 21, thereby forming a sealed connection between the housing 31 of the high-voltage box and the case wall 21. The external pollutants are reduced from entering the case 20 through the through hole 22.

Specifically, the sealing member 40 is provided with a first surface and a second surface opposite to each other along the arrangement direction of the high-voltage box and the case 20, the first surface abuts against the housing 31, and the second surface abuts against the case wall 21.

In the embodiments of the present application, the sealing member 40 may be a sealing ring, a sealing glue, a hollow sealing block, a sealing plate, or the like.

The battery 100 provided in this application includes a case 20, a battery cell 10, a power distribution box 30, and a sealing member 40. The housing 31 is disposed on the outer side of the case wall 21 and connected to the case wall 21, that is, the power distribution box 30 is disposed on the outer side of the case 20, the power distribution box 30 is disposed independently of the case 20, and the high-temperature gas leaked from the battery cell 10 due to the thermal failure does not directly enter the power distribution box 30, thereby reducing the thermal damage to the power distribution box 30. The adapter base 32 is directly connected to the housing 31, and the power distribution box 30 with the adapter base 32 is connected to the case 20, which not only satisfies the connection strength between the adapter base 32 and the power distribution box 30, reduces the probability of pollutants and the like entering the power distribution box 30 via the adapter base 32, and improves the sealing performance between the adapter base 32 and the power distribution box 30, but also simplifies the assembly degree of the power distribution box 30 and the case 20, thereby improving the assembly efficiency of the battery 100. The sealing member 40 is disposed between the case wall 21 and the housing 31 and surrounds the through hole 22 to realize the sealing of the adapter base 32 and the case 20, thereby reducing the risk of external pollutants entering the case 20 through the through hole 22, and improving the reliability of the battery 100.

According to one embodiment of the present application, the housing 31 and the adapter base 32 are integrally connected.

Specifically, the power distribution box 30 includes a housing 31 and an adapter base 32 that are integrally formed, and a forming manner of the housing 31 and the adapter base 32 is not limited in this embodiment of this application. Optionally, the housing 31 and the adapter base 32 are integrally formed by stamping. Alternatively, the housing 31 and the adapter base 32 are formed by vacuum die casting.

In these optional embodiments, the housing 31 and the adapter base 32 are integrally provided, so that the housing 31 and the adapter base 32 have a relatively high connection strength, and the housing 31 and the adapter base 32 have a relatively high sealing performance, and the two are not easy to fall off when subjected to an external force, and the reliability of the battery 100 is improved.

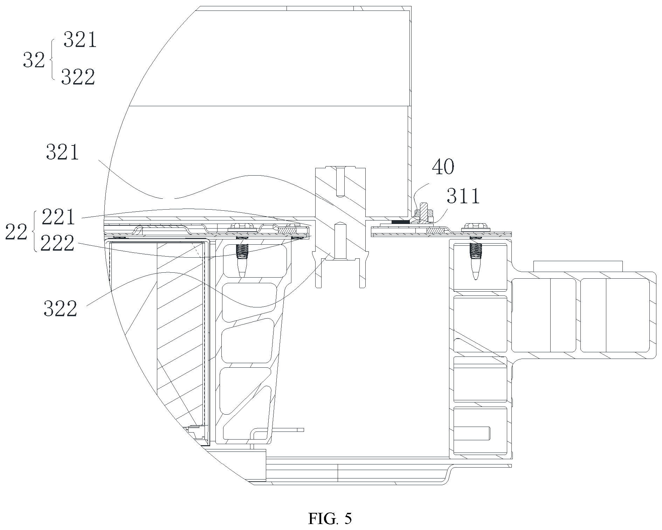

Referring to FIG. 4 and FIG. 5, FIG. 4 is a schematic cross-sectional structural diagram of the battery provided in some embodiments shown in FIG. 3 along a-a. FIG. 5 is a partial enlarged schematic structural diagram of the battery of some embodiments shown in FIG. 4.

As shown in FIG. 3 to FIG. 5, according to one embodiment of the present application, the adapter base 32 includes a first adaptation portion 321 and a second adaptation portion 322, the first adaptation portion 321 is connected to the housing 31 and extends into the housing 31, and the second adaptation portion 322 is connected to the first adaptation portion 321 and extends into the through hole 22.

In the embodiment of the present application, the adapter base 32 includes a first adaptation portion 321 and a second adaptation portion 322, and the first adaptation portion 321 is connected to the housing 31 and extends into the housing 31, and can be connected to the electrical device accommodated in the housing 31. The second adaptation portion 322 is connected to the first adaptation portion 321 and extends toward the through hole 22, and extends into the through hole 22 to be connected to other components in the case 20, for example, as the total positive output electrode and the total negative output electrode of the plurality of battery cells 10.

In these optional embodiments, the adapter base 32 includes a first adaptation portion 321 and a second adaptation portion 322, the first adaptation portion 321 extends into the housing 31 to be connected to the electrical device in the housing 31, and the second adaptation portion 322 extends into the through hole 22 to be connected to the component in the case 20, so as to realize the adaptation of the power distribution box 30 and the case 20.

According to one embodiment of the present application, an orthographic projection of the housing 31 on the case wall 21 covers an orthographic projection of the sealing member 40 on the case wall 21.

Specifically, the housing 31 includes a bottom wall, the bottom wall is connected to the case wall 21, the adapter base 32 is connected to the bottom wall, the wall portion is a rectangular structure having a predetermined length and width, the sealing member 40 is a sealing ring, an orthographic projection area of the bottom wall on the case wall 21 is greater than an orthographic projection area of the sealing ring on the case wall 21, and the orthographic projection of the bottom wall on the case wall 21 covers the orthographic projection of the sealing ring on the case wall 21.

Exemplarily, the sealing member 40 is a sealing ring, the sealing ring is disposed between the case wall 21 and the housing 31 and surrounds the through hole 22, and the sealing ring is sleeved on the adapter base 32.

Exemplarily, the sealing member 40 includes two sealing rings, the power distribution box 30 includes a housing 31 and two adapter base 32, the housing 31 is provided with two through holes 22, the sealing rings are disposed between the case wall 21 and the housing 31 and surround the corresponding through holes 22, and each sealing ring is sleeved on the corresponding adapter base 32.

Exemplarily, the sealing member 40 is a sealing ring, the sealing ring is disposed between the case wall 21 and the housing 31 and surrounds the through hole 22, and the sealing ring is disposed along an edge of the bottom wall.

In these optional embodiments, such an arrangement enables the sealing member 40 to have an appropriate size, which not only achieves the sealing of the adapter base 32 and the case 20, but also reduces the manufacturing cost of the sealing member 40.

As shown in FIG. 4 and FIG. 5, according to one embodiment of the present application, a surface of the housing 31 facing the case wall 21 is provided with a protrusion 311, and the protrusion 311 is used to limit the sealing member 40.

In the embodiment of the present application, the housing 31 includes a housing body and a protrusion 311 connected to a surface of the housing body and protruding toward the case wall 21, and the protrusion 311 is configured to limit the sealing member 40, so as to reduce the possibility that the sealing member 40 moves during the assembly process of the power distribution box 30 and the case 20 and during the transportation or use process of the battery 100, which affects the sealing performance between the adapter base 32 and the case 20.

Specifically, a plurality of protrusions 311 are provided on a surface of the housing 31 facing the case wall 21, and the plurality of protrusions 311 are arranged at intervals along the periphery of the sealing member 40.

In these optional embodiments, the protrusion 311 is used to define the sealing member 40 to improve the sealing between the adapter base 32 and the case 20.

According to one embodiments of the present application, the protrusion 311 are arranged surrounding the seal 40.

In the embodiment of the present application, the protrusion 311 is disposed around the sealing member 40 to form an annular protrusion 311, which cooperates with the sealing member 40, and the sealing member 40 is attached to an inner surface of the protrusion 311 facing the sealing member 40.

Optionally, the protrusion 311 is disposed around the seal 40 by one circle.

As shown in FIG. 4 and FIG. 5, according to one embodiment of the present application, the case wall 21 includes a heat exchange plate 211 and a protection plate 212, the heat exchange plate 211 is disposed on a side of the protection plate 212 facing away from the power distribution box 30 and is connected to the protection plate 212, the heat exchange plate 211 is thermally connected to the battery cell 10 to adjust the temperature of the battery cell 10, the through hole 22 includes a first through hole 221 and a second through hole 222, the protection plate 212 is provided with the first through hole 221, the heat exchange plate 211 is provided with the second through hole 222, and the first through hole 221 is communicated with the second through hole 222.

In the embodiment of the present application, the case wall 21 includes a protection plate 212, the protection plate 212 is disposed on a side of the heat exchange plate 211 facing away from the battery cell 10 and is connected to the heat exchange plate 211, and the protection plate 212 may cover a part of the heat exchange plate 211 or may completely cover the protection plate 212. The protective plate 212 may be configured to be connected to the power distribution box 30.

In some embodiments, the protection plate 212 may be connected to the heat exchange plate 211 by bonding, fastener connecting, welding, clamping, or other means.

In some embodiments, the protective plate 212 may be a plate with an equal thickness or a plate with an unequal thickness.

In some embodiments, the material of the protection plate 212 may be metal, plastic, metal-plastic composite material, or other materials. Alternatively, the metal may be aluminum, an aluminum alloy, stainless steel, nickel-plated steel, or others.

In an embodiment of the present application, the case wall 21 includes a heat exchange plate 211, the heat exchange plate 211 is disposed on a side of the protection plate 212 facing away from the power distribution box 30 and is connected to the protection plate 212, and the heat exchange plate 211 is provided with a flow channel for the heat exchange medium to flow, or the protection plate 212 is provided with a heat exchange pipeline for guiding the heat exchange medium to flow. The battery cell 10 is connected to the heat exchange plate 211 to adjust the temperature of the battery cell 10. The heat exchange medium flowing in the heat exchange plate 211 can quickly take away the heat generated by the battery cell 10 to achieve the purpose of temperature adjustment.

In some embodiments, the material of the heat exchange plate 211 may be aluminum or an aluminum alloy, and the heat exchange plate 211 is aluminum or an aluminum alloy. Aluminum or aluminum alloy has a good heat conduction effect. Moreover, the aluminum or aluminum alloy has a small weight, which can reduce the weight of the entire case 20 and improve the energy density of the battery 100.

In some embodiments, the heat exchange medium is a flowable medium, for example: The heat exchange medium, including water, ethanol, oil, and Freon, may absorb heat inside the case 20, or the flowing heat exchange medium takes away heat inside the battery case 20 to the external environment, so as to achieve the purpose of temperature adjustment.

In these optional embodiments, the heat exchange plate 211 and the protection plate 212 are integrated on the case 20, which not only facilitates the installation of the power distribution box 30, but also can perform heat exchange with the battery cells 10, and can reduce the number of parts of the battery and improve the integration level of the battery 100.

According to one embodiment of the present application, the sealing member 40 is an elastic member.

In the embodiment of the present application, the sealing member 40 is an elastic member, and optionally, the sealing member 40 may be a sealing ring, and the material of the sealing ring may be, but is not limited to, rubber. The sealing member 40 has a certain elasticity, and can be elastically deformed by a force. During the assembly process of the high-pressure box and the case wall 21, the sealing member 40 is pressed and deformed by the force, which can increase the contact area between the sealing member 40 and the case wall 21.

In these optional embodiments, the sealing member 40 is an elastic member, so that when the high-pressure box is assembled with the case wall 21, the sealing area between the sealing member 40 and the case wall 21 is increased through the elastic deformation of the sealing member 40, thereby improving the sealing effect between the sealing member 40 and the case wall 21.

According to one embodiment of the present application, the power distribution box 30 protrudes from the top of the case 20.

In the embodiment of the present application, the power distribution box 30 is protruded from the top of the main body. When the case 20 of the battery 100 is used as a chassis of a vehicle, since the power distribution box 30 is located on the top of the case 20, it is not exposed to the outside of the vehicle and may be protected from external impact, increasing the reliability of the power distribution box 30.

As shown in FIG. 2 and FIG. 4, according to one embodiment of the present application, the battery 100 further includes a connecting member 50, and the connecting member 50 is configured to connect the housing 31 and the case wall 21.

Specifically, a mounting hole is provided on an edge of the housing 31, the connecting member 50 is fixed to the case wall 21, and the connecting member 50 may pass through the mounting hole to connect the housing 31 and the case wall 21, thereby connecting the case 20 and the power distribution box 30. Optionally, the connecting member 50 is a stud, and the stud is welded to a surface of the side of the case wall 21 facing the power distribution box 30. In this way, the case 20 and the power distribution box 30 are connected by the connecting member 50, and the structures of the case 20 and the power distribution box 30 are not changed greatly.

In these optional embodiments, the case 20 and the power distribution box 30 are connected by the connecting member 50 to improve the assembly stability of the case 20 and the power distribution box 30.

According to one embodiment of the present application, the plurality of battery cells 10 are electrically connected and form a total positive output electrode and a total negative output electrode, and the total positive output electrode and the total negative output electrode are connected to the adapter base 32.

The present application provides an electric apparatus, including the foregoing battery 100, and the battery 100 is used for providing electrical energy.

According to some embodiments of this application, referring to FIG. 2 to FIG. 5, the battery 100 includes a case 20, a battery cell 10, a power distribution box 30, a sealing member 40, a connecting member 50, a total positive output electrode, and a total negative output electrode. The case 20 includes a case wall 21, the case wall 21 includes a heat exchange plate 211 and a protection plate 212, the heat exchange plate 211 is disposed on a side of the protection plate 212 facing away from the power distribution box 30 and is connected to the protection plate 212, and the battery cell 10 is thermally connected to the heat exchange plate 211. The case wall 21 is provided with a through hole 22, the through hole 22 includes a first through hole 221 and a second through hole 222, the protective plate 212 is provided with a first through hole 221, the heat exchange plate 211 is provided with a second through hole 222, and the first through hole 221 is communicated with the second through hole 222. The battery cell 10 is accommodated in the case 20. The power distribution box 30 includes a housing 31 and an adapter base 32, the housing 31 is disposed on the top of the outer side of the case wall 21 and connected to the case wall 21, and the adapter base 32 is integrally connected to the housing 31. The orthographic projection of the housing 31 on the case wall 21 covers the orthographic projection of the sealing member 40 on the case wall 21. A protrusion 311 is provided on a surface of the housing 31 facing the case wall 21, the protrusion 311 is disposed around the sealing member 40 by one cycle, and the protrusion 311 is configured to limit the sealing member 40. The adapter base 32 includes a first adaptation portion 321 and a second adaptation portion 322, the first adaptation portion 321 is connected to the housing 31 and extends into the housing 31, and the second adaptation portion 322 is connected to the first adaptation portion 321 and extends into the through hole 22. The sealing member 40 is disposed between the case wall 21 and the housing 31 and surrounds the through hole 22, and the sealing member 40 is an elastic sealing ring. The connecting member 50 is used to connect the housing 31 and the case wall 21. The total positive output electrode and the total negative output electrode are disposed in the case 20, and the total positive output electrode and the total negative output electrode are connected to the adapter base 32.

Although the present application has been described with reference to some preferred embodiments, various modifications to the present application and replacements of the components therein with equivalents can be made without departing from the scope of the present application. In particular, the technical features mentioned in the embodiments may be combined in any manner provided that there is no structural conflict. The present application is not limited to the specific embodiments disclosed herein, but includes all technical solutions falling within the scope of the claims.

## Claims

1. A battery, comprising:
a case, comprising a case wall, wherein the case wall is provided with a through hole;
a battery cell accommodated in the case;
a power distribution box, comprising a housing and an adapter base, wherein the housing is disposed on an outer side of the case wall and connected to the case wall, the adapter base is connected to the housing, and at least a part of the adapter base is accommodated in the through hole; and
a sealing member, disposed between the case wall and the housing and surrounding the through hole.

2. The battery according to claim 1, wherein the housing and the adapter base are integrally connected.

3. The battery according to claim 1, wherein the adapter base comprises a first adaptation portion and a second adaptation portion, wherein the first adaptation portion is connected to the housing and extends into the housing, and the second adaptation portion is connected to the first adaptation portion and extends into the through hole.

4. The battery according to claim 1, wherein an orthographic projection of the housing on the case wall covers an orthographic projection of the sealing member on the case wall.

5. The battery according to claim 1, wherein a protrusion is provided on a surface of the housing facing the case wall, and the protrusion is configured to limit the sealing member.

6. The battery according to claim 5, wherein the protrusion is disposed around the sealing member.

7. The battery according to claim 1, wherein:
the case wall comprises a heat exchange plate and a protection plate, wherein the heat exchange plate is disposed on a side of the protection plate facing away from the power distribution box and is connected to the protection plate, and the heat exchange plate is connected to the battery cell in a heat conduction manner to adjust a temperature of the battery cell; and
the through hole comprises a first through hole and a second through hole, wherein the protection plate is provided with the first through hole, the heat exchange plate is provided with the second through hole, and the first through hole is communicated with the second through hole.

8. The battery according to claim 1, wherein the sealing member is an elastic member.

9. The battery according to claim 1, wherein the power distribution box is protruded from the top of the case.

10. The battery according to claim 1, wherein the battery further comprises a connecting member, and the connecting member is used for connecting the housing and the case wall.

11. The battery according to claim 1, wherein the plurality of battery cells are electrically connected to form a total positive output electrode and a total negative output electrode, and the total positive output electrode and the total negative output electrode are connected to the adapter base.

12. An electric apparatus, comprising the battery according to any one of claims 1 - 11, the battery being used for providing electrical energy.
